# EUROPEAN PATENT APPLICATION

(11) **EP 3 967 609 A1**
(43) Date of publication of application: **16.03.2022**
(21) Application number: 20315410.9
(22) Date of filing: 15.09.2020
(51) Int. Cl.: B64D 41/00, H01M 8/04, H01M 8/04089, H01M 8/04014, H01M 8/04082, B64D 27/24

(54) **AIRCRAFT COMPRISING A FUEL CELL AND A DIOXYGEN SUPPLY UNIT**

(71) Applicant: Airbus Operations GmbH, 21129 Hamburg (DE)
(72) Inventor: Klewer, Guido, 21129 Hamburg (DE); Hancock, Kurtus, 21129 Hamburg (DE); Fonyo, Felix, 21129 Hamburg (DE)
(74) Representative: Cabinet Le Guen Maillet

(57) **Abstract**

The invention concerns an aircraft (100) comprising a propeller, an electric motor (108) to drive the propeller in rotation, a fuel cell (114) with an anode (114a) and a cathode (114b) and producing electrical energy for the electric motor (108), a dihydrogen tank (120) fluidly connected to the inlet of the anode (114a), an air inlet (132) drawing air from the atmosphere and fluidly connected to the inlet of the cathode (114b) through a second pipe (126), a dioxygen supply unit (134) which supplies pure dioxygen, a dioxygen supply pipe (140) fluidly connected between the dioxygen supply unit (134) and the second pipe (126), a regulation valve (136) arranged on the dioxygen supply pipe (140), and a control unit (142) controlling the opening of the regulation valve (136).

Thanks to this arrangement, it is possible to mix air coming from the air inlet and the dioxygen coming from the dioxygen supply unit to improve the efficiency of the fuel cell.

## Description

### TECHNICAL FIELD

The present invention concerns an aircraft comprising a fuel cell supplied with dioxygen by an air inlet and a dioxygen supply unit fluidly connected to the fuel cell through a regulation valve.

### TECHNICAL BACKGROUND

In order to fly, an aircraft comprises propulsion systems, each comprising an electric motor and a propeller. The motor generates a rotary motion that is transmitted to the propeller. To power the electric motor, it is known to use fuel cells.

In order to supply the fuel cell with dihydrogen, the aircraft has dihydrogen tanks and in order to supply the fuel cell with dioxygen, the aircraft has an opening in its skin through which the ambient air flows to be driven to the fuel cell.

Even if this arrangement is working well, it is necessary to improve the efficiency of the fuel cell.

### SUMMARY OF THE INVENTION

An object of the present invention is to provide an aircraft comprising a fuel cell supplied with dioxygen by an air inlet and a dioxygen supply unit fluidly connected to the fuel cell through a regulation valve.

For this purpose, an aircraft is proposed, this aircraft comprising:
- a fuel cell which produces electrical energy to power systems of the aircraft, said fuel cell comprising an anode and a cathode,
- a dihydrogen tank fluidly connected to the inlet of the anode,
- an air inlet drawing air from the atmosphere and fluidly connected to the inlet of the cathode through a second pipe,
- a dioxygen supply unit which supplies pure dioxygen,
- a dioxygen supply pipe which is fluidly connected between the dioxygen supply unit and the second pipe,
- a regulation valve arranged on the dioxygen supply pipe, and
- a control unit which controls the opening of the regulation valve in order to adapt the part of pure dioxygen mixed with air.

Thanks to this arrangement, it is possible to mix air coming from the air inlet and the dioxygen coming from the dioxygen supply unit to improve the efficiency of the fuel cell.

According to a first embodiment, the dioxygen supply unit is a dioxygen tank in which pure dioxygen is stored.

According to a second embodiment, the dioxygen supply unit comprises:
- a by-pass pipe fluidly connected to the second pipe,
- a heat exchanger, the inlet of which is fluidly connected to the by-pass pipe and which is arranged to transfer heat between the air in the by-pass pipe and the liquid dihydrogen stored in the dihydrogen tank, and
- a separator which comprises an inlet fluidly connected to the outlet of the heat exchanger, a first outlet fluidly connected to the dioxygen supply pipe and through which dioxygen is exhausted, and a second outlet through which nitrogen is exhausted.

### BRIEF DESCRIPTION OF THE DRAWINGS

The aforementioned characteristics of the invention, as well as others, will become more apparent by reading the following description of an embodiment, the said description being provided in relation with the appended drawings, in which:
Fig. 1 is a front view of an aircraft according to the invention,
Fig. 2 is a schematic view of an electrical generating system used in the aircraft according to a first embodiment of the invention, and
Fig. 3 is a schematic view of an electrical generating system used in the aircraft according to a second embodiment of the invention.

### DETAILED DESCRIPTION OF EMBODIMENTS

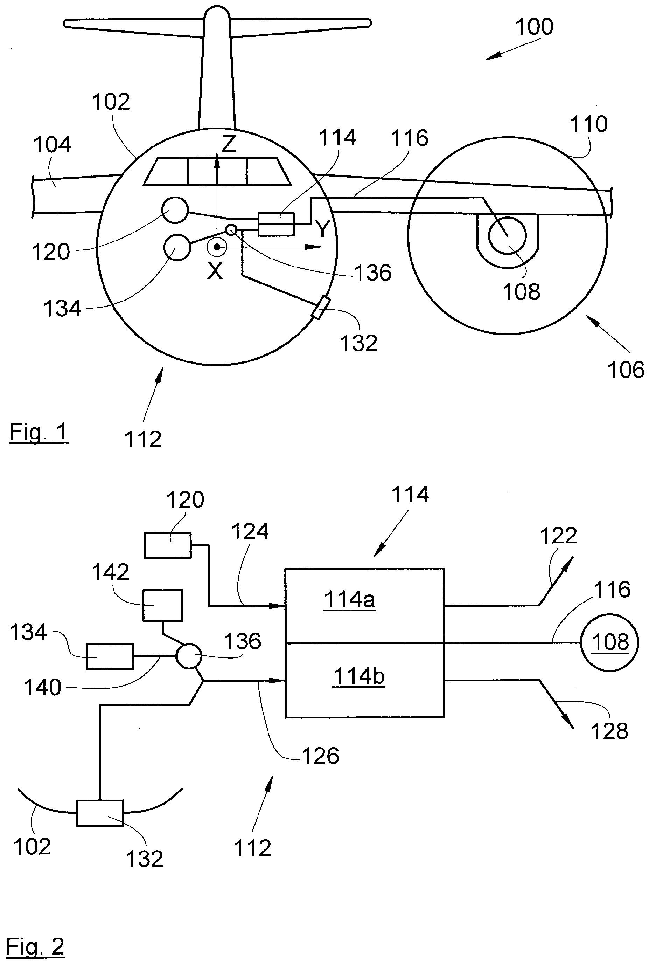

Fig. 1 represents an aircraft 100 comprising a fuselage 102 and two wings 104 disposed on each side of the fuselage 102. Under each wing 104, the aircraft 100 comprises at least one propulsion system 106.

Each propulsion system 106 has a propeller 110 and an electric motor 108, the output shaft of which drives the propeller 110 in rotation.

The aircraft 100 comprises also an electrical generating system 112 comprising a fuel cell 114 which produces electrical energy to power the electric motor 108 by electrical conductors 116 that extend between the electrical generating system 112 and the propulsion system 106 and more precisely between the fuel cell 114 and the electric motor 108.

A fuel cell is an electrochemical cell that converts the chemical energy of a fuel (here dihydrogen) and an oxidizing agent (here dioxygen) into electricity through a pair of redox reactions.

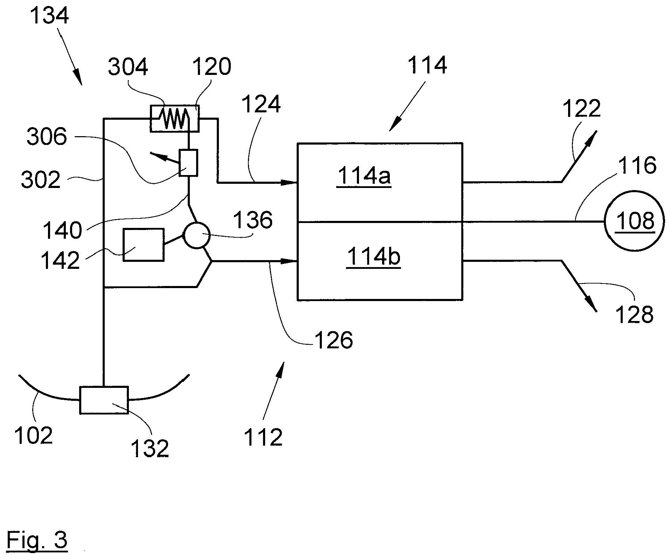

Fig. 2 shows the electrical generating system 112 according to a first embodiment and Fig. 3 shows the electrical generating system 112 according to a second embodiment. The electrical generating system 112 is implemented in the fuselage 102 but it can be implemented in the wings for example.

The fuel cell 114 comprises an anode 114a and a cathode 114b.

The inlet of the anode 114a is fluidly connected to a dihydrogen tank 120 through a first pipe 124 that supplies the anode 114a with dihydrogen. In the present embodiment, the electrical generating system 112 comprises also a first discharge pipe 122 fluidly connected to the outlet of the anode 114a and in which the dihydrogen not consumed by the anode 114a is extracted from the anode 114a.

The electrical generating system 112 comprises an air inlet 132 which draws air from the atmosphere. Typically, the air inlet 132 is a scoop in the skin of the aircraft 100 and here the skin of the fuselage 102.

The inlet of the cathode 114b is fluidly connected to the air inlet 132 through a second pipe 126 that supplies the cathode 114b with air. In the present embodiment, the electrical generating system 112 comprises also a second discharge pipe 128 fluidly connected to the outlet of the cathode 114b and in which the dioxygen depleted air is extracted from the cathode 114b.

The electrical generating system 112 comprises a dioxygen supply unit 134 which supplies pure dioxygen.

The electrical generating system 112 comprises a dioxygen supply pipe 140 which is fluidly connected between the dioxygen supply unit 134 and the second pipe 126.

The electrical generating system 112 comprises a regulation valve 136 arranged on the dioxygen supply pipe 140 to regulate the amount of dioxygen flowing through the dioxygen supply pipe 140 and mixed with the air coming from the air inlet 132.

The electrical generating system 112 comprises also a control unit 142 which controls the regulation valve 136 in order to adapt the part of pure dioxygen mixed with air. The control unit 142 controls the opening of the regulation valve 136.

If it is necessary to have more dioxygen, the opening of regulation valve 136 is increased and if it is necessary to have less dioxygen, the opening of regulation valve 136 is decreased.

Thanks to this arrangement, it is possible to adapt the portion of pure dioxygen mixed with air. The air is then enriched in dioxygen and the efficiency of the fuel cell is improved and the amount of heat rejected by the fuel cell 114 is reduced in comparison to the amount of heat rejected for the same power generated by the fuel cell 114 with air which is not enriched with dioxygen.

Preferably, the air injected at the inlet of the cathode 114b contains about 40% of dioxygen in comparison to a natural air containing about 20% of dioxygen. Obviously, greater or lower values are also possible.

According to the first embodiment, the dioxygen supply unit 134 is a dioxygen tank 134 in which pure dioxygen is stored. The dioxygen stored in the dioxygen tank 134 can be gaseous or liquid.

According to the second embodiment, there is no dedicated dioxygen tank and the dioxygen is produced by separation of the dioxygen and of the nitrogen of air.

The dioxygen supply unit 134 comprises a by-pass pipe 302 fluidly connected to the second pipe 126, a heat exchanger 304, the inlet of which is fluidly connected to the by-pass pipe 302 and which is arranged to transfer heat between the air in the by-pass pipe 302 and the liquid dihydrogen stored in the dihydrogen tank 120. When the dihydrogen is stored in the liquid state, its temperature is below -252,87°C.

In the embodiment shown in Fig. 3, the heat exchanger 304 is arranged in the dihydrogen tank 120.

The dioxygen supply unit 134 comprises also a separator 306 which comprises an inlet fluidly connected to the outlet of the heat exchanger 304, a first outlet fluidly connected to the dioxygen supply pipe 140 and a second outlet which is here open outwards.

Thanks to such embodiment, the air flowing through the heat exchanger 304 is cooled until a low temperature between -210°C and -220°C. At this temperature, the nitrogen of the air condenses but the dioxygen stays gaseous.

The separator 306 separates the liquid phase (nitrogen) and the gaseous phase (dioxygen). The dioxygen is exhausted through the first outlet into the dioxygen supply pipe 140 to enrich the air coming directly from the air inlet 132, and the nitrogen is exhausted through the second outlet.

The second embodiment avoids the installation of a dioxygen tank in the aircraft 100, reducing the weight and the size of the electrical generating system 112.

In the embodiment described here, the fuel cell 114 powers the electric motor 108, but the fuel cell 114 can power any other systems of the aircraft 100.

## Claims

1. Aircraft (100) comprising:
- a fuel cell (114) which produces electrical energy to power systems (108) of the aircraft, said fuel cell (114) comprising an anode (114a) and a cathode (114b),
- a dihydrogen tank (120) fluidly connected to the inlet of the anode (114a),
- an air inlet (132) drawing air from the atmosphere and fluidly connected to the inlet of the cathode (114b) through a second pipe (126),
- a dioxygen supply unit (134) which supplies pure dioxygen,
- a dioxygen supply pipe (140) which is fluidly connected between the dioxygen supply unit (134) and the second pipe (126),
- a regulation valve (136) arranged on the dioxygen supply pipe (140), and
- a control unit (142) which controls the opening of the regulation valve (136) in order to adapt the part of pure dioxygen mixed with air.

2. Aircraft (100) according to claim 1, wherein the dioxygen supply unit (134) is a dioxygen tank (134) in which pure dioxygen is stored.

3. Aircraft (100) according to claim 1, wherein the dioxygen supply unit (134) comprises:
- a by-pass pipe (302) fluidly connected to the second pipe (126),
- a heat exchanger (304), the inlet of which is fluidly connected to the by-pass pipe (302) and which is arranged to transfer heat between the air in the by-pass pipe (302) and the liquid dihydrogen stored in the dihydrogen tank (120), and
- a separator (306) which comprises an inlet fluidly connected to the outlet of the heat exchanger (304), a first outlet fluidly connected to the dioxygen supply pipe (140) and through which dioxygen is exhausted, and a second outlet through which nitrogen is exhausted.
